# EUROPEAN PATENT SPECIFICATION

(11) **EP 0 538 039 B1**
(45) Date of publication and mention of the grant of the patent: **15.07.1998**
(21) Application number: 92309424.7
(22) Date of filing: 15.10.1992
(51) Int. Cl.: H01M 2/12, H01M 2/04, H01M 2/06

(54) **A seal for an electrochemical cell**
Dichtungsanordnung für eine elektrochemische Zelle
Elément d'étanchéité pour une cellule électrochimique

(30) Priority: 15.10.1991 US 775401
(43) Date of publication of application: 21.04.1993
(73) Proprietor: EVEREADY BATTERY COMPANY, INC., St. Louis Missouri 63164 (US)
(72) Inventor: Georgopoulos, Phillip, Westlake, OH 44145 (US)
(74) Representative: Tubby, David George

(56) References cited:
- EP-A- 0 107 267
- EP-A- 0 262 070
- EP-A- 0 282 649
- EP-A- 0 495 383
- WO-A-91/09429
- GB-A- 2 058 440
- US-A- 4 227 701
- PATENT ABSTRACTS OF JAPAN vol. 13, no. 142 (E-739)(3490) 7 April 1989 & JP-A-63 304 568 ( TOSHIBA BATTERY CO LTD ) 12 December 1988
- PATENT ABSTRACTS OF JAPAN vol. 6, no. 9 (E-90)(887) 20 January 1982 & JP-A-56 132 765 ( MATSUSHITA DENKI SANGYO K.K. ) 17 October 1981
- PATENT ABSTRACTS OF JAPAN vol. 13, no. 38 (E-709)27 January 1989 & JP-A-63 236 255 ( HITACHI MAXELL LTD ) 3 October 1988
- PATENT ABSTRACTS OF JAPAN vol. 5, no. 176 (E-81)(848) 12 November 1981 & JP-A-56 103 862 ( MATSUSHITA DENKI SANGYO K.K. ) 19 August 1981
- PATENT ABSTRACTS OF JAPAN vol. 12, no. 162 (E-609)17 May 1988 & JP-A-62 274 549 ( HITACHI MAXELL LTD ) 28 November 1987
- PATENT ABSTRACTS OF JAPAN vol. 7, no. 45 (E-160)(1190) 23 February 1983 & JP-A-57 194 452 ( HITACHI MAXELL K.K. ) 30 November 1982

## Description

The present invention relates to a seal for an electrochemical cell, which seal comprises a ventable area of weakness. It also relates to the use of such a seal, in particular with a cylindrical electrochemical cell.

Generally, electrochemical cells consist of a container or can into which the active components of the cell are placed, the container being sealed with a seal member, normally made of a plastics material, and a cover terminal. A current collector, which is typically a nail-shaped piece, passes through the seal member to contact either the anode or the cathode, and the cover terminal contacts one of the cell electrodes via the current collector. Such an arrangement is commonly found in cylindrical electrochemical cells.

The seal assembly, which consists of the seal member (which is hereinafter referred to either a seal or as a seal member) and the cover terminal, is intended to perform two functions which initially appear to be in conflict. The first function is to seal the cell so that the components do not leak out under conditions of normal use and so that the components are not contaminated by contact with air and moisture, and the second function is to allow the cell to vent when the internal pressure exceeds a predetermined value.

In order to satisfy the first requirement, seal members have been made of a strong synthetic material, such as an electrically insulating plastics material. Such materials, for example "engineering plastics" such as nylon or polyvinyl chloride, are impermeable to air and moisture, and therefore provide a sealing and insulating member. The material chosen must, however, also be strong enough to maintain its seal after physical abuse, such as dropping of the cell, exposure of the cell to vibration and/or subjection of the cell to extreme variations in temperature and/or humidity. The engineering plastics, having substantial mechanical rigidity and tensile strength, are favoured materials for seal members.

In order to satisfy the second requirement, a means for venting is included in, or built into, the seal member. In this way, violent rupturing of the cell under conditions of abuse can be avoided. Many forms of venting means have been explored in the prior art, examples of which include: plugs which are designed to blow out under abuse conditions, as described US-A-4,075,398; gas-permeable membranes backed up by metal washers, as described in US-A-3,219,488; and various forms of seal having alternating thin and thick areas in the base, such as are described in GB-A-2,218,564 and US-A-4,476,200. Seal members which have a vent comprising a recess having a frangible diaphragm are described in US-A-4,476,200 and US-A-4,774,155, and US-A-4,191,806 describes such an arrangement wherein the frangible diaphragm is further scored with at least one score line. The vents in all of these arrangements are located in the base section of a standard seal member, between the outer edge walls and the central hub.

Unfortunately, it has proven difficult to manufacture seals that perform both of these vital functions reliably. Typically, seal members are moulded from synthetic materials, but it has been found that the synthetic materials often do not flow properly to fill the mould in the correct manner during the moulding process, and, as a result, the resulting seal member does not conform to the necessary specifications.

One of the most common defects in moulded seal members is known as hub splitting, i.e. cracks or splits are present in the seal at the area through which the current collector passes. Hub splitting often occurs if a weak spot, formed at the hub during the moulding process, is disrupted by insertion of the nail-shaped current collector through the hub. The contact of such weak areas with a crazing agent, such as potassium hydroxide increases the stress on the hub, thereby increasing the likelihood that a defective hub will eventually split. This defect has an extremely detrimental effect on the cell, for example because it will allow the electrolyte, such as potassium hydroxide, to migrate from the interior of the cell.

The design of vent in the seal member will often have an effect on hub splitting, and many prior art designs have been found to exacerbate rather than cure this problem. Thus, for example, if the vent is provided by moulding the seal with areas of different thickness to provide, for example, a vent having a substantially circular diaphragm located between the central hub and the outer edge walls of the seal, it is often the case that the flow of material into the mould is not uniform, since the different thicknesses within the mould will create different high pressure gradients during filling of the mould. These pressure gradients adversely impact the ability of the molten plastic to pack into the mould, thereby weakening the mechanical properties of the moulded part. Thus, some portions of the seal may cool and cure prematurely, possibly resulting in a weak spot, which in turn may facilitate hub splitting.

The particular design of vent in the seal may itself lower the reliability of the vent. Thus, for example, many seals are made with a vent portion that is a uniformly thin section of the seal with the intention that, when the internal cell pressure increases under abuse conditions, the thin vent portion will burst. However, in many cases, the vent will balloon rather than burst and, in such cases, the pressure is not relieved.

In view of the many problems encountered with known seals, a seal that can be made without the problems of non-uniform curing and that will reliably seal and vent the cell is desired.

It is the aim of the present invention to provide a seal which overcomes the problems of the prior art, which seal comprises a venting means so designed as to concentrate the effects of any build up of pressure within a cell such that the seal vents efficiently under pressure. It is a further object of the present invention to provide such a seal which may be manufactured using a moulding process.

In a first aspect, the present invention provides a seal for an electrochemical cell, the seal comprising an outer edge wall connected via a base to a hub substantially centrally located within the base, the hub being such as to receive and retain a current collector and the base comprising a ventable recessed area of weakness, characterised in that the area of weakness is located at the intersection of the base with the hub and extends around the circumference of the hub to form an arc of between about 135° and about 250°, and in that the recess is so configured as to concentrate the effects of any build up of pressure within the cell at the area of weakness.

According to the present invention, the base of the seal comprises a ventable recessed area of weakness located at the intersection of the base with the hub. The base of the seal may include, or may consist entirely of, a diaphragm, i.e. either a portion of the base, or the whole of the base, forms a diaphragm. When the base includes a diaphragm portion, this diaphragm may occupy any appropriate amount of the base, and will typically include the recessed area of weakness. When the base consists entirely of the diaphragm, the diaphragm suitably extends from the outer edge wall via the ventable area of weakness to the hub. It is preferred that the base consists entirely of the diaphragm.

In the span from the recessed area of weakness to the outer edge wall, the diaphragm portion and/or the base may be of uniform thickness, e.g. resulting in a diaphragm and/or base which is substantially flat from its interface with the outer edge wall to the recessed area of weakness. Alternatively, the diaphragm and/or the base may be of non-uniform thickness in this span. It is preferred that the diaphragm portion is of non-uniform thickness in this span, such that the diaphragm becomes gradually thicker in the direction away from the ventable area of weakness towards the outer edge wall.

In a preferred embodiment, the seal includes a diaphragm portion which, together with the ventable area of weakness, forms the entire base, which diaphragm portion is of non-uniform thickness such that it becomes gradually thicker in the direction away from the area of weakness towards the outer edge wall, i.e. such that the base is thinnest at the intersection of the ventable area of weakness with the hub. It is more preferred that the diaphragm is thickest at a point between the outer edge wall and the intersection of the diaphragm with the hub at the ventable area of weakness.

In the seal of the present invention, the area of weakness is recessed. By recessed in this connection is meant that the ventable area of weakness is set back from the remainder of the base, i.e. in a direction away from the components in the container when the seal is fitted. The recess is so configured as to concentrate the effects of any build up of pressure within the cell at the area of weakness. This configuration is typically determined by the configuration of the base and/or diaphragm and the hub, and, in particular, is determined by the angle at which these two components intersect. Thus, in a seal having the most preferred construction as described above, the base will typically slope in an upwards direction, such that there will be a relatively narrow angle, i.e. less than 90°, formed between the slope of the base and the hub.

In accordance with the present invention, the area of weakness extends around the intersection of the base with the hub to form an arc of between about 135° and about 250°. The size of the arc may vary depending upon various factors, for example the size of the cell and the desired focus of internal pressure at the area of weakness, and the exact size of the arc chosen should be such that the stresses from an increase in internal pressure created under conditions of abuse are focused at the area of weakness. It has been found that, generally, the more the size of the arc varies from 180°, the less the pressure is focused at the area of weakness, although larger cells may tolerate a greater variance from 180° than smaller cells. It is preferred, therefore, that the arc ranges between about 160° and about 200°, and it is most preferred that the arc is about 180°.

In a further embodiment of the present invention, at least one hinge is provided at the intersection of the diaphragm with the outer edge wall. The hinge may take any appropriate form that allows the base and/or diaphragm to return to its original position after venting. Thus, the hinge may take the form of a score line around the juncture of the base or diaphragm with the outer edge wall, or the hinge may be made in a separate step and incorporated into the seal during manufacture. There may be one hinge at this intersection, or more than one hinge, spaced along the length of the intersection. Inclusion of a hinge will facilitate the action of the vent, by enabling the diaphragm to return to its original position after venting. It is preferred that, when present, there is only one hinge.

In yet a further embodiment of the present invention, the underneath surface of the base, i.e. the surface which is directed towards the cell container during use, is coated with a layer of a protective substance. The substance used for coating is so chosen as to protect the seal member from crazing by the alkaline electrolyte. Suitable coating substances include asphalt, bitumen, synthetic resins, adhesives and lacquers, with asphalt being most preferred.

In a second aspect, the present invention provides a cylindrical electrochemical cell comprising an anode, a cathode and an electrolyte contained in a cylindrical container that is closed at one end and open at the other; wherein the open end of the container is sealed with a seal assembly that comprises:
(a) a disc-shaped seal member made from an electrically insulative material, and which has an outer edge wall connected via a base to a centrally located cylindrical hub that defines an orifice; which base has a ventable diaphragm portion and a portion that is thicker than the diaphragm portion; and wherein the diaphragm portion joins the hub at an interface and becomes gradually thicker in the direction away from the interface toward the outer edge wall so that the diaphragm portion is thinnest at the interface; and
(b) a current collector extending through the orifice defined by the hub into the cell's interior to contact one of the cell's electrodes.

In a further aspect, the present invention provides a cylindrical electrochemical cell comprising an anode, a cathode and an electrolyte contained in a cylindrical container that is closed at one end and open at the other; wherein the open end of the container is sealed with a seal assembly that comprises:
(a) a disc-shaped seal member made from an electrically insulative material, and which has an outer edge wall connected via a base to a centrally located cylindrical hub that defines an orifice, and which base has a ventable diaphragm portion and a portion that is thicker than the diaphragm portion; and wherein the diaphragm portion joins the hub at an interface, which interface forms an arc such that the stresses from internal pressure increase created under abuse conditions are focused at the interface; and
(b) a current collector extending through the orifice defined by the hub into the cell's interior to contact one of the cell's electrodes.

In a still further aspect, there is provided a seal according to the present invention in which the hub extends through the base of the seal upwardly away from the cell interior and downwardly toward the cell interior, the inner circumference of the upper portion of the hub being less than the inner circumference of the lower portion of the hub.

In this aspect of the invention, the current collector extends through the hub in an interference fit with the hub, such that any stress caused by insertion of the current collector through the hub during assembly of the cell will be absorbed by the portion of the hub having the smaller circumference.

It is furthermore preferred that the outer circumference of the hub substantially follows that of the inner circumference of the hub, i.e. that the outer circumference of the upper portion of the hub is less than the outer circumference of the lower portion of the hub, and in particular that any increase in the outer circumference will not interfere with the movement of the diaphragm.

In accordance with this aspect, the present invention provides a cylindrical electrochemical cell comprising an anode, a cathode and an electrolyte contained in a cylindrical container that is closed at one end and open at the other; wherein the open end of the container is sealed with a seal assembly that comprises:
(a) a disc-shaped seal member made from an electrically insulative material, and which has an outer edge wall connected via a base to a centrally located cylindrical hub that defines an orifice, which hub has a first end extending above the base in a direction away from the cell's interior and a second end extending below the base in a direction into the cell's interior, and wherein the orifice defined by the exterior extending end of the hub has a circumference that is less than the circumference of the orifice defined by the interior extending end of the hub; and
(b) a current collector extending through the orifice defined by the hub in an interference fit with the circumference of the orifice in the exterior extending end of the hub, and which current collector extends into the cell's interior to contact one of the cell's electrodes.

In a further embodiment, the present invention provides a cylindrical electrochemical cell comprising an anode, a cathode and an electrolyte contained in a cylindrical container that is closed at one end and open at the other; wherein the open end of the container is sealed with a seal assembly that comprises:
(a) a disc-shaped seal member made from an electrically insulative material, and which has an outer edge wall connected via a base to a centrally located cylindrical hub that defines an orifice; which base has a ventable diaphragm portion and a portion that is thicker than the diaphragm portion; which hub has a first end extending above the base in a direction away from the cell's interior and a second end extending below the base in a direction into the cell's interior, and wherein the orifice defined by the exterior extending end of the hub has a circumference that is less than the circumference of the orifice defined by the interior extending end of the hub; and wherein the diaphragm portion joins the hub at an interface, which interface forms an arc such that the stresses from internal pressure increase created under abuse conditions are focused at the interface; and
(b) a current collector extending through the orifice defined by the hub in an interference fit with the circumference of the orifice in the exterior extending end of the hub, and which current collector extends into the cell's interior to contact one of the cell's electrodes.

The seal according to the present invention is configured to engage with the appropriate cell container. Thus, the seals may be configured to engage with cylindrical electrochemical cells, i.e. the seal is substantially disc shaped, or they may be configured to engage with cells having other shapes, such as those with a square or rectangular cross section. The configuration of such seals is standard and known to the skilled person.

The material from which the seals of the present invention are constructed is typically an electrically insulating material which provides a barrier to air and moisture. Such materials include mouldable engineering plastics, for example polyvinyl chloride, polyolefins, nylons, polyesters etc. The most preferred material is nylon 6.6, available from E.I. Du Pont de Nemours & Co.

The seals may be made by any standard technique known in the art for the manufacture of such articles. They are particularly suited for moulding techniques, such as injection moulding, whereby the plastics material is injected into a mould of the desired form. When such a technique is used, it is preferred to inject the plastics material onto the side of the mould first in order for the material to flow from the outer edge wall, through the non-ventable portion of the base, then through the ventable portion and finally into the centrally located hub.

The seals of this invention, which are useful in electrochemical cells, are easily made because the synthetic material can flow evenly from the thicker portion to the diaphragm portion. The seals also focus the stress of venting at the diaphragm and hub intersection so that the seals vent reliably.

The seals according to the invention find use in a variety of cell types and are particularly suited for use on any cell which has a tendency to build up internal pressure during use. The seals are mainly suitable for use in cells that require sealing from the air and from moisture and that build up pressure during use, thereby requiring a means for venting. The seals have been found to be especially useful in alkaline cells, i.e. those which utilise an alkaline electrolyte, such as potassium hydroxide, and also in carbon-zinc cells, lithium cells, etc.

Thus, in a further aspect, the present invention provides the use of a seal as herein defined to seal an electrochemical cell, in particular a cylindrical electrochemical cell. Additionally, or alternatively, the present invention also provides an electrochemical cell comprising a seal as herein defined.

Cells comprising a seal according to the invention typically comprise the standard cell components, i.e. an anode, for example comprising zinc; a cathode, for example comprising manganese dioxide; and an electrolyte, generally of potassium hydroxide. The cells are generally assembled in the standard fashion, i.e. by placing the components in a container, and hermetically sealing the seal member into the container, for example by crimping of the container wall, followed by insertion of the current collector and closing with the cover terminal.

The invention is further illustrated by the accompanying drawings, in which:

Figure 1 shows a cross section of the seal of the present invention.

Figure 2 shows a bottom view of the seal of the present invention.

Figure 3 shows a cross section of the open end of an assembled electrochemical cell comprising a seal in accordance with the invention.

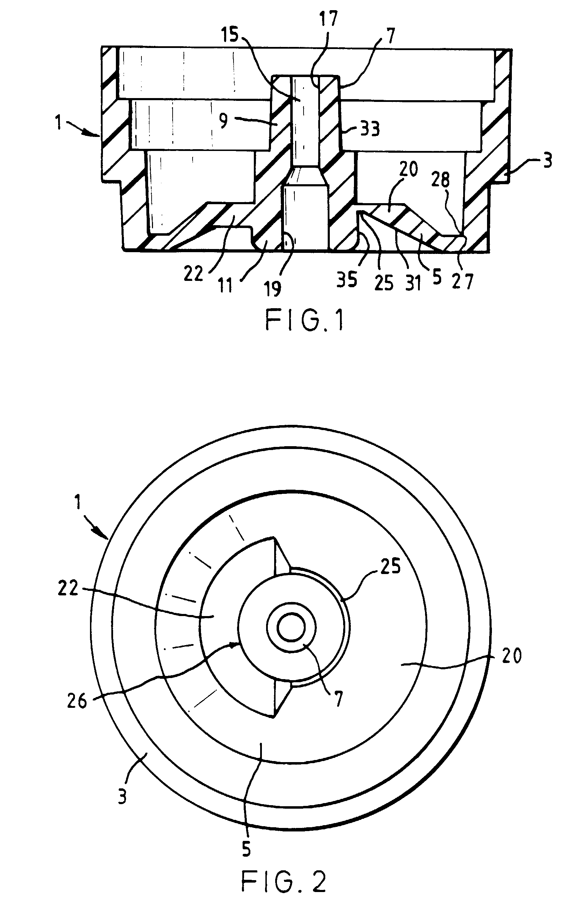

Referring to Figure 1, seal member 1 has outer edge wall 3 connected via base 5 to centrally located cylindrical hub 7. Hub 7 has first end 9 extending above base 5 and second end 11 extending below base 5. The hub 7 defines orifice 15. Orifice 15 has a circumference 19 in at least a part of the first extending end 9 that is less than the circumference 19 in the second extending end 11. Thus, when a current collector is inserted through the orifice, the stress of insertion will be absorbed in the first extending end above the base. The base may be in a variety of shapes and, as is shown in Figure 1, the base 5 has angles and bends. Alternatively, if a diaphragm portion forms part of the base, the base could be substantially flat from the outer edge wall to the hub, with a recess for the diaphragm and ventable area of weakness.

Base 5 has a ventable diaphragm portion 20 and a non-ventable thicker portion 22. The thinnest part of the diaphragm 20 is at the intersection 25 of the diaphragm 20 and the hub 7. A hinge 27 is provided by the juncture 28 of the diaphragm 20 and outer edge wall 3. The thickest part 31 of the diaphragm 20 is between the outer edge wall 3 and the hub 7. Thus, under abuse conditions, the seal will vent at the diaphragm portion. The stresses of the abuse conditions will be focused at the intersection of the diaphragm portion and the hub, and since this is the thinnest portion of the base, the seal will tear at the intersection first. The hinge provided at the juncture of the diaphragm and the outer edge wall facilitates the action of the vent. It is preferred that the outer circumference 33 of the first extending end 9, which is located just below the interface 25 of the diaphragm portion 20 and 22, be less than the outer circumference 35 of the second extending end 11 of the hub 7 just above and below the intersection 25 of the diaphragm portion 20 and the hub 7. Thus, the edge of the diaphragm will not catch on the first end of the hub during venting of the seal.

Referring to Figure 2, seal member 1 is shown with outer edge wall 3 connected to hub 7 via base 5. Base 5 has thick portion 22 and diaphragm portion 20. Diaphragm 20 joins hub 7 at intersection 25 and forms an arc. As shown in this Figure 2, the arc is 180°. The arc may vary so long as the stresses from internal pressure increase created under abuse conditions are focused at the intersection 25 of the diaphragm 20 and hub 7. Generally, the more the arc of the intersection varies from 180°, the more the stresses are focused away from the intersection. The arc may range from about 135° to about 250°, and preferably ranges from about 160° to about 200°, with 180° being most preferred. This arc may also vary according to cell size, with the larger cell sizes able to tolerate a wider variance from 180° than the smaller cell sizes. Thick portion 22 also joins hub 7 at an intersection 26, which forms an arc complimentary to the arc formed by intersection 25.

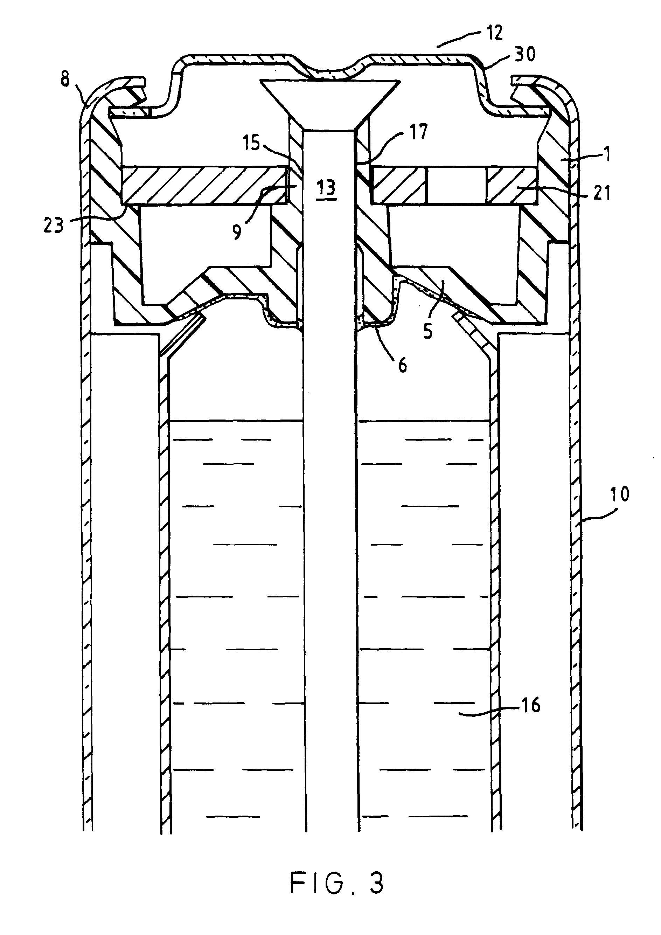

Referring to Figure 3, electrochemical cell 10 is shown with open end 12 covered with seal member 1. The bottom of the base 5 is coated with an asphalt layer 6 to protect the seal member from crazing by the alkaline electrolyte. Current collector 13 extends through hub 7 of seal member 1 and is in an interference fit with the orifice 15 defined by the inner circumference 17 of first end 9 of hub 7. Current collector 13 extends to contact anode 16 on the interior of cell 10. The cell 10 is completed by placing neutral cover 21 onto seal member 1 at ledge 23. Terminal cover 30 is placed over the top of seal member 1 and is in contact with current collector 13, and the cell's container wall 8 is crimped to provide a hermetic seal.

## Claims

1. A seal (1) for an electrochemical cell, the seal (1) comprising an outer edge wall (3) connected via a base (5) to a hub (7) substantially centrally located within the base (5), the hub (7) being such as to receive and retain a current collector (13) and the base (5) comprising a ventable recessed area of weakness, characterised in that the area of weakness is located at the intersection (25) of a diaphragm portion (20) of the base (5) with the hub (7) and extends around the circumference of the hub (7 to form an arc of between about 135° and about 250°, and in that the recess is so configured as to concentrate the effects of any build up of pressure within the cell at the area of weakness and in that the thickness of the diaphragm portion (20) increases in the direction away from the area of weakness.

2. A seal (1) according to claim 1 wherein the area of weakness extends around the circumference of the hub 7) to form an arc of between about 160° and about 200°.

3. A seal (1) according to claim 2 wherein the area of weakness extends around the circumference of the hub 7) to form an arc of about 180°.

4. A seal (1) according to any preceding claim wherein the base (5) consists entirely of a diaphragm (20), the diaphragm (20) including an area of weakness at its intersection (25) with the hub (7).

5. A seal (1) according to claim 4 wherein the diaphragm (20) is thickest at a point (31) between the outer edge wall (3) and the ventable area of weakness.

6. A seal (1) according to claim 4 or claim 5 wherein the diaphragm (20) comprises at least one hinge (27) at its intersection (28) with the outer edge wall.

7. A seal (1) according to any preceding claim comprising a layer of protective coating (6) on the underneath surface of the base (5).

8. A seal according to claim 7 wherein the protective coating is formed from asphalt.

9. A seal (1) according to any preceding claim which is injection moulded from polyvinyl chloride, a polyolefin, a nylon or a polyester.

10. A seal (1) according to claim 9 which is injection moulded from nylon 6.6.

11. A seal (1) according to any preceding claim wherein the hub (7) extends through the base (5) of the seal (1) upwardly away from the cell interior (9) and downardly toward the cell interior (11), the inner circumference (19) of an upper portion of the hub (9) being less than the inner circumference (19) of the lower portion of the hub (11).

12. A seal (1) according to claim 11 wherein the outer circumference (33) of the upper portion of the hub (9) is less than the outer circumference (33) of the lower portion of the hub (11).

13. Use of a seal (1) as defined in any preceding claim in an electrochemical cell.

14. An electrochemical cell (10) comprising a seal (1) as defined in any one of claims 1 to 12.

15. A cylindrical electrochemical cell (10) comprising an anode (16), a cathode and an electrolyte contained in a cylindrical container (10) that is closed at one end and open at the other; wherein the open end of the container (10) is sealed with a seal assembly according to any one of the preceding claims.

## Patentansprüche

1. Dichtung (1) für eine elektrochemische Zelle, wobei die Dichtung (1) eine Außenwand (3) aufweist, die über einen Boden (5) mit einem im wesentlichen zentral innerhalb des Bodens (5) angeordneten Kern (7) verbunden ist, wobei der Kern (7) so beschaffen ist, daß er einen Stromabnehmer (3) aufnimmt und festhält, und wobei der Boden (5) eine entlüftbare ausgesparte Schwächezone aufweist, dadurch gekennzeichnet, daß die Schwächezone an der Schnittlinie (25) eines Membranabschnitts (20) des Bodens (5) mit dem Kern (7) angeordnet ist und sich um den Umfang des Kerns (7) herum erstreckt und einen Bogen von etwa 135° bis etwa 250° bildet, und daß die Aussparung so gestaltet ist, daß sie die Auswirkungen eines Druckaufbaus innerhalb der Zelle auf die Schwächezone konzentriert, und daß die Dicke des Membranabschnitts (20) in der von der Schwächezone abgewandten Richtung zunimmt.

2. Dichtung (1) nach Anspruch 1, wobei die Schwächezone sich um den Umfang des Kerns (7) herum erstreckt und einen Bogen von etwa 160° bis etwa 200° bildet.

3. Dichtung (1) nach Anspruch 2, wobei die Schwächezone sich um den Umfang des Kerns (7) herum erstreckt und einen Bogen von etwa 180° bildet.

4. Dichtung (1) nach einem der vorstehenden Ansprüche, wobei der Boden (5) vollständig aus einer Membran (20) besteht, und wobei die Membran (20) an ihrer Schnittlinie (25) mit der Kern (7) eine Schwächezone aufweist.

5. Dichtung (1) nach Anspruch 4, wobei die Membran (20) an einer Stelle (31) zwischen der Außenwand (3) und der entlüftbaren Schwächezöne am dicksten ist.

6. Dichtung (1) nach Anspruch 4 oder Anspruch 5, wobei die Membran (20) an ihrer Schnittlinie (28) mit der Außenwand mindestens ein Gelenk (27) aufweist.

7. Dichtung (1) nach einem der vorstehenden Ansprüche, die an der Unterseite des Bodens (5) eine Schutzüberzugsschicht (6) aufweist.

8. Dichtung nach Anspruch 7, wobei der Schutzüberzug aus Asphalt gebildet wird.

9. Dichtung (1) nach einem der vorstehenden Ansprüche, die im Spritzgußverfahren aus Polyvinylchlorid, einem Polyolefin, einem Nylon oder einem Polyester hergestellt wird.

10. Dichtung (1) nach Anspruch 9, die im Spritzgußverfahren aus Nylon 6.6 hergestellt wird.

11. Dichtung (1) nach einem der vorstehenden Ansprüche, wobei der Kern (7) sich durch den Boden (5) der Dichtung (1) nach oben vom Zelleninneren (9) weg und nach unten zum Zelleninneren (11) hin erstreckt, wobei der innere Umfang (19) eines oberen Kernabschnitts (9) kleiner ist als der innere Umfang (19) des unteren Kernabschnitts (11).

12. Dichtung (1) nach Anspruch 11, wobei der äußere Umfang (33) des oberen Kernabschnitts (9) kleiner ist als der äußere Umfang (33) des unteren Kernabschnitts (11).

13. Verwendung einer in irgendeinem vorstehenden Anspruch definierten Dichtung (1) in einer elektrochemischen Zelle.

14. Elektrochemische Zelle (10) mit einer Dichtung (1), wie sie in irgendeinem der Ansprüche 1 bis 12 definiert ist.

15. Zylinderförmige elektrochemische Zelle (10) mit einer Anode (16), einer Kathode und einem Elektrolyten, der in einem zylinderförmigen, an einem Ende geschlossenen und am anderen Ende offenen Behälter (10) enthalten ist; wobei das offene Ende des Behälters (10) mit einer Dichtungseinheit nach einem der vorstehenden Ansprüche verschlossen ist.

## Revendications

1. Elément d'étanchéité (1) pour pile électrochimique, l'élément d'étanchéité (1) comprenant une paroi de chant extérieure (3) connectée par l'intermédiaire d'une base (5) à un pivot (7) localisé dans une position substantiellement centrale dans la base (5), le pivot (7) étant de configuration telle qu'il reçoit et retient un collecteur de courant (13) et la base (5) comprenant une zone de faiblesse évidée pouvant être déchargée des gaz, caractérisé en ce que la zone de faiblesse est localisée à l'intersection (25) d'une partie de diaphragme (20) de la base (5) avec le pivot (7) et s'étend autour de la circonférence du pivot (7) pour former un arc d'une dimension compris entre environ 135°C et environ 250°C et en ce que l'évidement est configuré de manière à concentrer les effets de toute accumulation de pression dans la pile dans la zone de faiblesse, et en ce que l'épaisseur de la partie de diaphragme (20) augmente dans la direction qui s'éloigne de la zone de faiblesse.

2. Elément d'étanchéité (1) selon la revendication 1, dans lequel la zone de faiblesse s'étend autour de la circonférence du pivot (7) pour former un arc d'une dimension comprise entre environ 160° et environ 200°.

3. Élément d'étanchéité (1) selon la revendication 2, dans lequel la zone de faiblesse s'étend autour de la circonférence du pivot (7) pour former un arc d'une dimension d'environ 180°.

4. Élément d'étanchéité (1) selon l'une quelconque des revendications précédentes, dans lequel la base (5) consiste dans sa totalité en un diaphragme (20), le diaphragme (20) comprenant une zone de faiblesse à son intersection (25) avec le pivot (7).

5. Elément d'étanchéité (1) selon la revendication 4, dans lequel le diaphragme (20) est le plus épais à un endroit (31) entre la paroi de chant extérieure (3) et la zone de faiblesse pouvant être déchargée des gaz.

6. Elément d'étanchéité (1) selon la revendication 4 ou la revendication 5, dans lequel le diaphragme (20) comprend au moins une articulation (27) à son intersection (28) avec la paroi de chant extérieure.

7. Elément d'étanchéité (1) selon l'une quelconque des revendications précédentes, comprenant une couche de revêtement protecteur (6) sur la surface de dessous de la base (5).

8. Elément d'étanchéité selon la revendication 7, dans lequel le revêtement protecteur est formé d'asphalte.

9. Elément d'étanchéité (1) selon l'une quelconque des revendications précédentes, qui est moulé par injection de polychlorure de vinyle, d'une polyoléfine, d'un nylon ou d'un polyester.

10. Elément d'étanchéité (1) selon la revendication 9, qui est moulé par injection de nylon 6.6.

11. Elément d'étanchéité (1) selon l'une quelconque des revendications précédentes, dans lequel le pivot (7) s'étend au travers de la base (5) de l'élément d'étanchéité (1) vers le haut en s'éloignant de l'intérieur de la pile (9) et vers le bas vers l'intérieur de la pile (11), la circonférence intérieure (19) d'une partie supérieure du pivot (9) étant plus petite que la circonférence intérieure (19) de la partie inférieure du pivot (11).

12. Elément d'étanchéité (1) selon la revendication 11, dans lequel la circonférence extérieure (33) de la partie supérieure du pivot (9) est inférieure à la circonférence extérieure (33) de la partie inférieure du pivot (11).

13. Utilisation d'un élément d'étanchéité (1) tel que défini dans l'une quelconque des revendications précédentes dans une pile électrochimique.

14. Pile électrochimique (10) comprenant un élément d'étanchéité (1) tel que défini dans l'une quelconque des revendications 1 à 12.

15. Pile électrochimique cylindrique (10) comprenant une anode (16), une cathode et un électrolyte contenus dans un réceptacle cylindrique (10) qui est fermé à l'une de ses extrémités et ouvert à l'autre; dans laquelle l'extrémité ouverte de réceptacle (10) est obturée avec un assemblage d'étanchéité selon l'une quelconque des revendications précédentes.
